# EUROPÄISCHE PATENTSCHRIFT

(11) **EP 3 116 112 B1**
(45) Veröffentlichungstag und Bekanntmachung des Hinweises auf die Patenterteilung: **07.06.2023**
(21) Anmeldenummer: 16178364.2
(22) Anmeldetag: 07.07.2016
(51) Int. Cl.: H02K 41/03, H02K 1/18, H02K 21/44

(54) **SEKUNDÄRTEIL UND PRIMÄRTEIL FÜR EINE TRANSVERSALFLUSSMASCHINE**
SECONDARY PORTION AND PRIMARY PORTION FOR A TRANSVERSAL FLOW MACHINE
PARTIE SECONDAIRE ET PARTIE PRIMAIRE D'UNE MACHINE A FLUX TRANSVERSALE

(30) Priorität: 08.07.2015 DE 102015212791
(43) Veröffentlichungstag der Anmeldung: 11.01.2017
(73) Patentinhaber: FGB A. Steinbach GmbH & Co. KG, 97616 Salz bei Bad Neustadt (DE)
(72) Erfinder: Gabel, Klaus, 97705 Burkhardroth (DE); Orlik, Bernd, 27793 Wildeshausen (DE); Siatkowski, Marek, 28307 Bremen (DE); Raffel, Holger, 28213 Bremen (DE)
(74) Vertreter: Hoffmann Eitle

(56) Entgegenhaltungen:
- EP-A2- 1 883 151
- AT-A1- 505 839
- DE-C1- 19 634 949
- DE-T5-112014 004 356
- GB-A- 2 518 690
- US-A1- 2006 108 879
- US-A1- 2010 109 452
- US-A1- 2012 074 798

## Beschreibung

### Gebiet der Erfindung

Die vorliegende Erfindung liegt auf dem Gebiet der elektrischen Antriebstechnik und betrifft ein Sekundärteil und ein Primärteil eine Transversalflussmaschine.

### Stand der Technik

Im industriellen Umfeld werden häufig elektromagnetische Linearantriebe verwendet. Diese finden zum Beispiel Verwendung in Werkzeugmaschinen, Positionierungssystemen für Plasma-/Laserschneideanlagen oder Industrierobotern. Bei Linearantrieben wird die lineare (translatorische, gradlinige) Bewegung nicht durch eine Umwandlung einer rotierenden Bewegung mittels mechanischer Umlenkelemente, wie Riemen, Ketten, Gewindespindeln oder Getrieben, sondern direkt erzeugt.

Bei industriellen Linear-Direktantrieben wird in der Regel das Sekundärteil im Stator (d.h. in der Trasse/Fahrweg) und die Wanderfeldwicklung (Primärteil) im Läufer (d.h. im Fahrzeug) installiert. Die Erregung im Fahrweg wird dabei mit Hochenergie-Permanentmagneten erzeugt, die längs des gesamten Fahrwegs installiert werden müssen. Dieses Aufbaukonzept findet zunehmend Eingang in den Maschinen- und Anlagenbau und wird häufig als Synchronmaschine mit Permanentmagneten (PMSM) ausgeführt. Letztere erreichen bei kleinstem Bauvolumen die höchste Vortriebskraft, sie enthalten aber, wie oben beschrieben, sowohl im Stator Magnete und im Läufer Kupferspulen.

Durch das teure Magnetmaterial, welches ungefähr ein Drittel der Maschinenkosten beträgt, steigen die Kosten des Linearantriebs mit der Länge des Fahrweges beträchtlich. Ein weiterer Nachteil solcher Antriebe sind die offen liegenden Permanentmagneten im Fahrweg. Werkzeuge, Eisenteile oder Späne haften an der Magnetbahn und lassen sich nicht abstreifen. Durch die hohe Anziehungskraft besteht außerdem für Arbeiter ein enormes Verletzungsrisiko. Daher muss der Fahrweg aufwändig gekapselt werden, was nicht für jede Industrieumgebung geeignet ist.

Dem gegenüber stehen asynchrone Linear-Direktantriebe, die als Stator z. B. eine einfache Aluminium-Schiene besitzen, deren Stator also passiv ist. Diese Antriebe sind bei langen Fahrwegen deutlich günstiger und besitzen die genannten Nachteile nicht. Die erreichbare Kraftdichte ist jedoch deutlich geringer, womit sich die Baugröße dieser Antriebe bei gleicher Vortriebskraft wesentlich erhöht, insbesondere dann wenn eine hohe Vortriebskraft im Stillstand gefordert wird. Gleichzeitig ist die Regelung dieser Antriebe komplexer.

Mit Hilfe der Transversalfluss-Technologie kann ein Motor gebaut werden, der die Vorteile beider Antriebstypen vereinigt. Durch die transversale Flussführung ist die Motorwicklung in Transversalflussmaschinen grundsätzlich parallel zur Bewegungsrichtung der Maschine, und nicht orthogonal, wie in konventionellen elektrischen Maschinen. Aufgrund dessen können in der Transversalflussmaschine Primärteil und Erregerteil miteinander verschmolzen werden. Dieses einzigartige Merkmal erlaubt den Bau einer Maschine mit einem passiven Stator, ohne gleichzeitig auf den Nutzen der permanentmagnetischen Erregung zu verzichten.

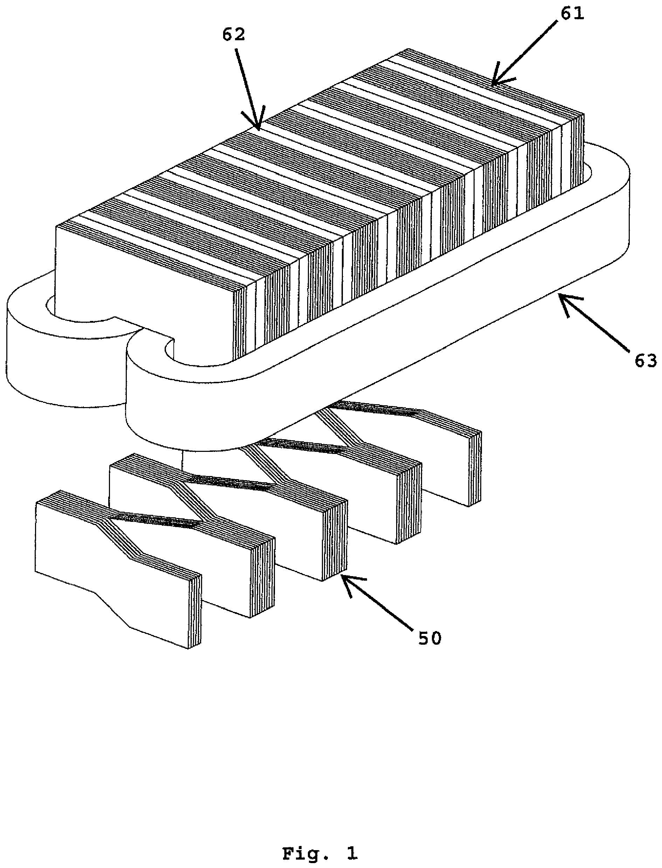

Figur 1 zeigt den Aufbau einer herkömmlichen Transversalflussmaschine. Das Primärteil umfasst eine Vielzahl von aufeinandergestapelten Blechen 61, die sich zwischen Permanentmagneten 62 befinden. Weiterhin umfasst das Primärteil eine Spule 63 als Elektromagneten. Das Sekundärteil 50 umfasst eine Vielzahl von gekröpften Blechen. Die Herstellung dieser Kröpfung ist jedoch sehr aufwändig und somit teuer. Beispielsweise müssen, wie in Figur 1 gezeigt, zur Herstellung des Sekundärteils je nach Länge mehrere unterschiedlich gebogene Bleche orthogonal (quer) zur Bewegungsrichtung aneinandergefügt werden. Dementsprechend ist die industrielle Fertigung der in Figur 1 gezeigten Transversalflussmaschine schwierig und mit hohen Kosten verbunden. Aus diesem Grund haben Transversalflussmaschinen bisher wenig praktische Verwendung im industriellen Maßstab gefunden.

Die Transversalflussmaschine wird z. B. in einem "Transfersystem" eingesetzt. In einem Transfersystem werden Bauteile von einer zur nächsten Bearbeitungsstation bzw. zum nächsten Bearbeitungsschritt befördert. Dabei arbeiten die Linearmotoren dreidimensional zusammen. Es findet also eine Greif-, Hub- und Längsbewegung statt. In der Regel werden für jede Bewegungsrichtung zwei Antriebe eingesetzt, die untereinander synchronisiert werden. Hier kommt es besonders auf eine hohe Dynamik bei kleinem Bauraum an. Da in den meisten Fällen auch ferromagnetische Werkstoffe transportiert werden, ist es wichtig, dass die Sekundärteile des Antriebs nicht magnetisch sind.

Der Stand der Technik (siehe z.B. DE 100 31 349 A1, DE 198 48 123 C1 oder DE 195 07 233 A1) befasst sich hauptsächlich mit der Optimierung der Vortriebskraft, der Baugröße, des Wirkungsgrades oder anderer Kriterien durch einen besonderen Aufbau der Magnetkreise in Transversalflussmaschinen. Aspekte, wie der mechanisch feste Einbau der Aktivteile, die Herstellung bzw. Integration der Wicklung, sowie die Möglichkeit der wirtschaftlichen industriellen Fertigung werden dabei oft vernachlässigt.

US 2006/0108879 A1 beschreibt eine lineare Transversalflussmaschine.

US 2010/0109452 A1 beschreibt eine Transversalflussmaschine. Der Rotor besteht aus einem mehrschichtigen Material. Der Stator besteht aus U-förmigen Blechen, die nach außen hin abgerundet sind.

DE 11 2014 004356 T5 beschreibt einen Magnetinduktions-Elektromotor mit einem Rotor und einem Stator. Der Stator weist einen ersten und zweiten Statorkern auf. Der erste und zweite Statorkern sind jeweils so in sechs gleiche Abschnitte unterteilt, dass sie aus sechs Kernblocken bestehen.

AT 505 839 A1 beschreibt eine einseitige Transversalflussmaschine mit einem feststehenden Teil, einem beweglichen Teil und in Bewegungsrichtung aufeinanderfolgend angeordneten Permanentmagneten mit abwechselnder Magnetisierungsrichtung.

US 2012/074798 A1 beschreibt eine elektromagnetische Rotationsmaschine. Der Rotor umfasst "T-bars".

DE 196 34 949 C1 beschreibt eine Transversalflussmaschine mit passivem Läufer und großem Luftspalt.

GB 2 518 690 A beschreibt ebenfalls eine Permanentmagnet-Rotor-Maschine.

### Zusammenfassung der Erfindung

Der Erfindung liegt die Aufgabe zu Grunde, eine Transversalflussmaschine zu konstruieren, die sowohl aus elektromagnetischer Sicht als auch aus fertigungstechnischer Sicht gute Eigenschaften bietet.

Diese Aufgabe wird gelöst durch die lineare Transversalflussmaschnine mit den Merkmalen des Patentanspruchs 1. Vorteilhafte Ausführungsformen sind in den Unteransprüchen beschrieben.

Gegenüber dem Stand der Technik weist das hier beschriebene Sekundärteil eine andere Blechrichtung auf, nämlich parallel zur Bewegungsrichtung des Primärteils (parallel zur Motorwicklung des Primärteils). Die mechanische Konstruktion vereinfacht sich dadurch deutlich und wird kostengünstiger. Insbesondere kann eine Vielzahl von identischen Blechen verwendet werden, die nicht gebogen werden müssen. Im Stand der Technik müssen dagegen viele unterschiedliche gebogene Bleche verwendet werden, wie in Figur 1 gezeigt.

Weiterhin verbessert sich die magnetische Flussführung im Sekundärteil und daraus folgend entstehen weniger Wirbelstromverluste. Dadurch können für das Sekundärteil Blechsorten verwendet werden, die zwar höhere Verluste haben, aber neben einer höheren Sättigungsinduktion auch kostengünstiger sind.

Die Sekundärteilpole können gemäß der vorliegenden Erfindung mit einfacher Fertigungstechnik fast beliebig ausgestaltet werden. Mit der Polform kann also Einfluss auf die mittlere Vortriebskraft, aber auch auf den Verlauf dieser Kraft über eine Periode genommen werden.

Gemäß der Ausführungsform der vorliegenden Erfindung sind die Sekundärteilbleche aus miteinander verbundenen Elektroblechen gebildet, die beispielsweise durch Fräsen, Stanzen, Umformen oder Laserschneiden erhalten werden.

Durch die verringerten Wirbelstromverluste im Sekundärteil können kostengünstige Elektrobleche verwendet werden.

Gemäß der Ausführungsform der vorliegenden Erfindung bilden die Sekundärteilbleche Pole, deren Polformen konkav, konvex oder spitz sind.

Folglich ermöglicht die vorliegende Erfindung eine weitgehend beliebige Gestaltung der Polgeometrie. Hierdurch kann Einfluss auf das Verhalten der Transversalflussmaschine (beispielsweise auf das Rastmoment) genommen werden.

Gemäß der Ausführungsform der vorliegenden Erfindung sind die Vorsprünge alternierend auf zwei Seiten jeder Schicht ausgebildet, so dass auf einen Vorsprung auf der einen Seite ein anderer Vorsprung auf der anderen Seite folgt. Alternativ oder zusätzlich sind die Vorsprünge auf zwei Seiten in jeder Schicht ausgebildet und die Vorsprünge der jeweiligen Seite folgen periodisch aufeinander.

Gemäß der Ausführungsform der vorliegenden Erfindung sind die Sekundärteilbleche aufeinandergestapelt.

In der Ausführungsform wird ein Primärteil für eine Transversalflussmaschine, die das Primärteil und einen Sekundärteil umfasst, beschrieben. Das Primärteil umfasst eine Vielzahl von aufeinandergestapelten Primärteilblechen und Permanentmagnete. Ein Teil der Primärteilbleche weist T-Nuten zum Adaptieren und Anbringen von Maschinenelementen auf.

Gemäß der vorliegenden Erfindung erfolgt das Anbringen der Maschinenelemente mit Hilfe von T-Nuten, die beim Lasern oder Stanzen der Bleche eingebracht werden. Diese Art der Befestigung führt zu einer deutlich verbesserten Handhabung, da sich die Pole durch die Magnetkraft extrem stark abstoßen und deshalb schwer zu fügen sind.

Gemäß einer vorteilhaften Ausführungsform umfasst das Primärteil eine Plattform, an der die Primärteilbleche mittels der T-Nuten angebracht sind.

Auf der Plattform können Maschinenelemente angebracht werden, die von der Transversalflussmaschine zu transportieren sind.

Gemäß einer vorteilhaften Ausführungsform sind die Primärteilbleche an einem Ende abgeschrägt oder abgerundet.

Dies führt zu einer Gewichtseinsparung im Primärteil und beeinflusst die Motoreigenschaften der Transversalflussmaschine.

### Kurze Beschreibung der Zeichnungen

Figur 1 zeigt den Aufbau einer herkömmlichen Transversalflussmaschine.
Figur 2A zeigt den Aufbau einer linearen Transversalflussmaschine mit erfindungsgemäßer Richtung der Sekundärteilbleche.
Figur 2B zeigt ein Beispiel eines Sekundärteilblechs.
Figur 3 zeigt verschiedene Geometrien der Vorsprünge der Sekundärteilbleche.
Figur 4 zeigt ein abgerundetes Primärteilblech.
Figur 5 zeigt den Aufbau eines Primärteils mit erfindungsgemäßen T-Nuten zur Befestigung der Primärteilbleche.
Figur 6 zeigt den Aufbau einer Transversalflussmaschine gemäß einer weiteren Ausführungsform der vorliegenden Erfindung.
Figur 7 zeigt den Aufbau einer nicht-erfindungsgemäßen, rotierenden Transversalflussmaschine.

### Beschreibung bevorzugter Ausführungsformen

Bevorzugte Ausführungsformen der vorliegenden Erfindung werden nachfolgend ausführlich unter Bezugnahme auf die beiliegenden Zeichnungen beschrieben. Dabei sind in den verschiedenen Zeichnungen gleiche oder entsprechende Elemente jeweils mit den gleichen oder ähnlichen Bezugszeichen bezeichnet.

Es wird angemerkt, dass die folgende Beschreibung nur Beispiele enthält und nicht als die Erfindung einschränkend angesehen werden sollte.

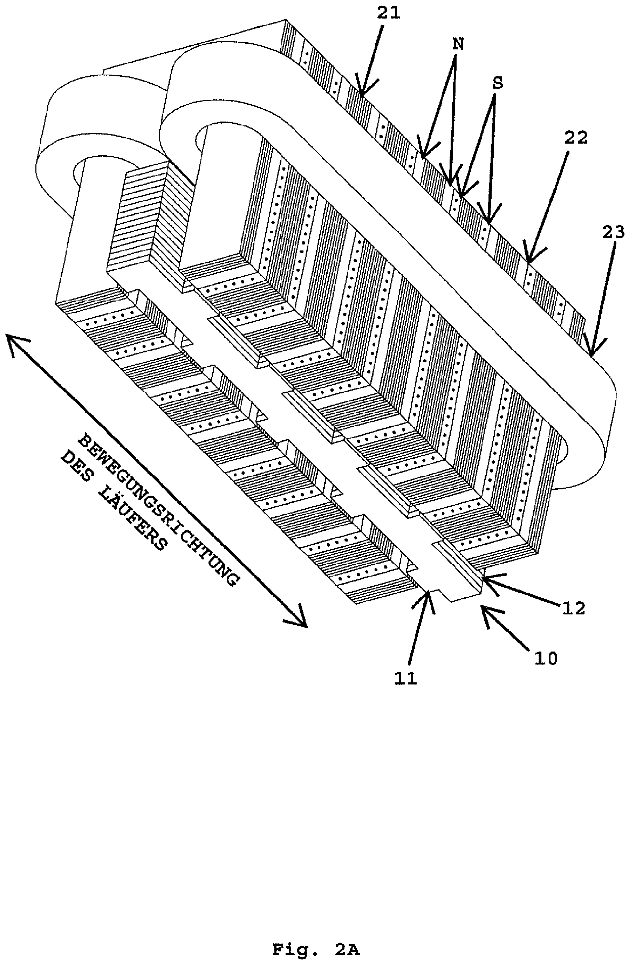

Figur 2A zeigt den Aufbau einer linearen Transversalflussmaschine mit erfindungsgemäßer Richtung der Sekundärteilbleche. Das Primärteil umfasst eine Vielzahl von aufeinandergestapelten Blechen 21, Permanentmagnete 22 und eine bzw. mehrere Spulen 23. Die Primärteilbleche 21 können zum Beispiel aus verbackten Blechen gebildet sein. Die Primärteilbleche 21 sind vorzugsweise miteinander verbackt und mit den Permanentmagneten 22 verklebt. Die Permanentmagnete 22 sind derart angeordnet, dass identische Pole (Nordpol N bzw. Südpol S) durch Primärteilbleche 21 getrennt sind. In der Figur 2A ist der Südpol mit Punkten gekennzeichnet. Die Primärteilbleche 21 und die Permanentmagnete 22 weisen in der Figur 1 ein identisches U-förmiges Profil (U-förmigen Querschnitt) auf. Durch das U-förmige Profil lassen sich die Spulen vorfertigen und später einfach einlegen. Außerdem lässt sich mit dieser Anordnung ein hoher Nutfüllfakor erzielen. Die Primärteilbleche 21 und die Permanentmagnete 22 können jedoch auch unterschiedliche Profile aufweisen. Vorzugsweise sind die Primärteilbleche 21 identisch und eine identische Anzahl von Primärteilblechen 21 ist zwischen zwei Permanentmagneten 22 mit unterschiedlichen Polen angeordnet, sodass die Paare von Permanentmagneten 22 gleiche Abstände aufweisen.

Die Spulen (Elektromagnet) 23 sind lediglich schematisch gezeigt und kann eine einzelne Wicklung oder eine Vielzahl von aufgewickelten voneinander isolierten (Rund- oder Flach-) Drähten umfassen.

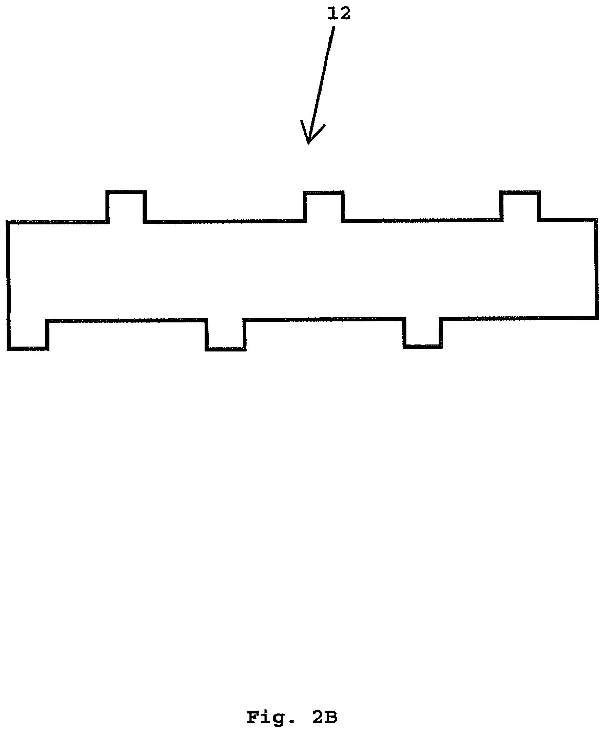

Das Sekundärteil 10 ist aus mehreren aufeinanderliegenden Schichten aus Sekundärteilblech gebildet und befindet sich zwischen den Primärteilblechen. Figur 2B zeigt ein Beispiel eines einzelnen Sekundärteilblechs 12. Die aufeinandergestapelten Sekundärteilbleche 12 in Figur 2A sind aus verbackten (Elektro-)Blechen gebildet oder bestehen aus diesen. Die Schichtebenen erstrecken sich parallel zur Bewegungsrichtung des Primärteils. Mit anderen Worten stehen die Sekundärteilbleche senkrecht auf den Primärteilblechen 21.

Weiterhin weist jedes Sekundärteilblech 12 einer Sekundärteilblechschicht Vorsprünge in der Schichtebene auf und die Vorsprünge der einzelnen Sekundärteilblechschichten überlappen sich, sodass sie Pole 11 des Sekundärteils 10 bilden. Die Vorsprünge erstrecken sich quer zur Bewegungsrichtung des Primärteils, insbesondere auf zwei gegenüberliegenden Seiten, wie in Figur 2A gezeigt. In Figur 2A sind die Vorsprünge rechteckig, sodass die Polform der Pole 11 gerade ist. Vorzugsweise weisen alle Vorsprünge eine identische Geometrie auf, um die Herstellung der Sekundärteilbleche zu vereinfachen.

Die Vorsprünge sind alternierend auf zwei Seiten jeder Schicht ausgebildet. Mit anderen Worten folgt auf einen Pol 11 auf einer Seite des Sekundärteilblechs ein Pol 11 auf der gegenüberliegenden Seite des Sekundärteilblechs. Vorzugsweise weisen die Vorsprünge feste Abstände auf.

Wie bei dem Sekundärteilblech 12 der Figur 2B ersichtlich, ist dieses vorzugsweise derart ausgebildet, dass die Vorsprünge alternierend auf zwei Seiten quer zur Längsrichtung des Blechs liegen, so dass auf einen Vorsprung auf der einen Seite ein anderer Vorsprung auf der anderen Seite in Längsrichtung folgt. Zusätzlich sind hier die Vorsprünge auf jeder der zwei Seiten periodisch mit festen Abständen hintereinander angeordnet. Die Struktur des Sekundärteilblechs der Figur 2B ist vorteilhaft, wenn ein langes Sekundärteil zum Überbrücken einer langen Weglänge hergestellt werden soll. Zur Herstellung eines solchen Sekundärteils müssen dann lediglich mehrere Sekundärteilbleche 12 aufeinandergestapelt werden und hintereinander angefügt/angelegt werden.

Eine Transversalflussmaschine gemäß der vorliegenden Erfindung weist eine hohe Kraftdichte auf, die mit der Kraftdichte aktueller Synchron-Linearantriebe vergleichbar ist. Das lange Sekundärteil 10 ist vollständig passiv, d.h. das Sekundärteil 10 umfasst weder Permanentmagnete noch Elektromagnete. Mit anderen Worten bezeichnet das Sekundärteil 10 die Blechstrecke. Die Permanentmagnete sind zusammen mit den Wicklungen im Primärteil untergebracht. Mit dem Begriff Primärteil wird die Motoreinheit mit Blechen, Spulen und Magneten bezeichnet. Damit können bei langen Fahrwegen bis zu 80% des Magnetmaterials eingespart werden. Gleichzeitig verringert sich die von den Magneten ausgehende Gefahr für Mensch und Maschine.

Weiterhin kann durch den Aufbau des Sekundärteils 10 durch eine Vielzahl von aufeinander liegenden Schichten aus Sekundärteilblech die Fertigung des Sekundärteils 10 wesentlich vereinfacht werden. Ein Sekundärteil wird aus einer Vielzahl von identischen Sekundärteilblechen durch Aufeinanderstapeln und Hintereinanderlegen hergestellt, die nicht gebogen werden müssen. Dies führt zu einer kostengünstigen Herstellung eines beliebig langen Sekundärteils (Gesamtlängensekundärteil).

Die einzelnen Sekundärteilbleche weisen bevorzugt eine Dicke von 0,35-1 mm auf. Die einzelnen Sekundärteilbleche weisen zum Beispiel eine Länge (parallel zur Bewegungsrichtung des Primärteils) von 600 mm auf. Der Fahrweg der Transversalflussmaschine kann beliebig durch Aneinanderreihen einer Vielzahl von Sekundärteilen 10 bzw. Sekundärteilblechen 12 zum Erhalten eines längeren Sekundärteils (Gesamtlängensekundärteil) verlängert werden. Ein Sekundärteil 10 gemäß der Ausführungsform der Erfindung ist derart ausgebildet, dass ein Gesamtlängensekundärteil durch einfaches Aneinanderreihen von einzelnen Sekundärteilen 10 mit einer Sekundärteilblechlänge erhalten wird, d.h. alle Sekundärteilbleche eines einzelnen Sekundärteils 10 weisen die gleiche Anzahl von Vorsprüngen auf der einen wie auf der anderen Seite auf, wobei der Abstand der Vorsprünge gleich ist und die Enden des Sekundärteils 10 derart gebildet sind, dass nach Anlegen weiterer Sekundärteile 10 wieder der gleiche Abstand zwischen den Vorsprüngen vorliegt. Dadurch lassen sich theoretisch beliebig lange Fahrwege konstruieren, wobei typische Fahrwege bei 600 mm bis 1600 mm liegen, aber auch beispielsweise bis zu 12000 mm betragen können.

In praktischen Anwendungen der Transversalflussmaschine ist eine kompakte Bauweise wichtig (insbesondere in der Breite und in der Höhe). Besonders wichtig dabei ist, dass die Bauhöhe möglichst flach ist, denn im Normalfall gibt eine Profilschienenführung die Bauhöhe vor. Mit der vorliegenden Erfindung ist es möglich, eine Breite von 100 mm und eine Gesamtbauhöhe von kleiner als 100 mm zu realisieren. Die Länge des Primärteils ist je nach Schubkraftbedarf (typischerweise zwischen 500 N und 4000 N) variabel und liegt bevorzugter Weise zwischen 350 mm und 900 mm. Die Transversalflussmaschine wird bevorzugter Weise in der Horizontalen eingesetzt. Sie kann jedoch auch in der vertikalen verwendet werden.

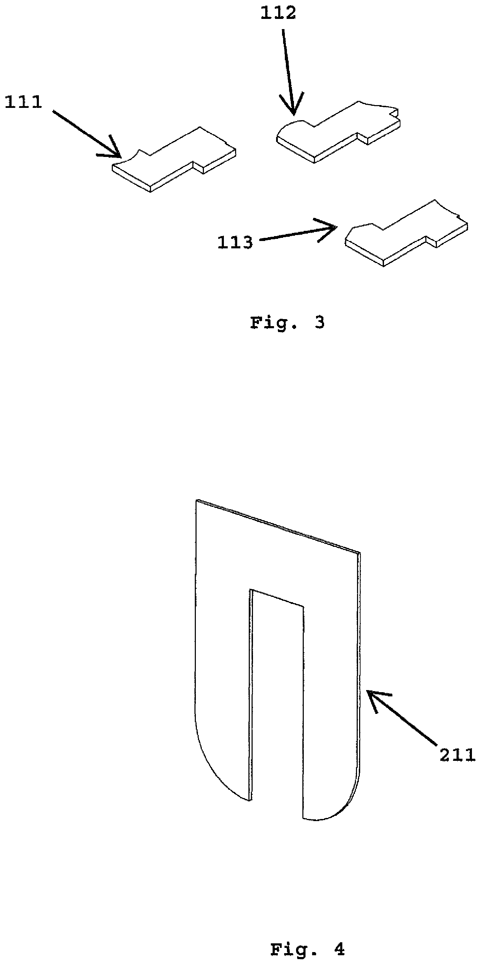

Figur 3 zeigt verschiedene Geometrien der Vorsprünge der Sekundärteilbleche. Die Polformen sind konkav 111, konvex 112 oder spitz 113. Durch die unterschiedlichen Polgeometrien kann das Rastmoment der Transversalflussmaschine beeinflusst werden, wodurch sich verschiedene Kraftverteilungen je nach Designanforderungen einstellen lassen.

Figur 4 zeigt ein abgerundetes Primärteilblech. Im Gegensatz zu den U-förmigen Primärteilblechen 21 in Figur 2A, ist das Primärteilblech 211 nach außen hin (weg vom Sekundärteil) abgerundet. Dies führt zu einer Gewichtseinsparung des Primärteils. Die Primärteilbleche können auch abgeschrägt sein.

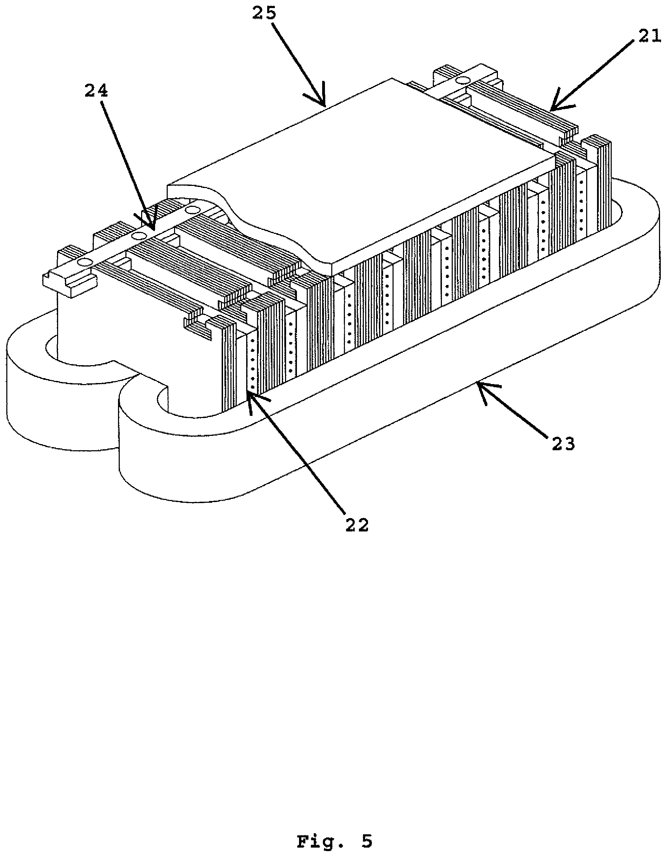

Figur 5 zeigt den Aufbau eines Primärteils mit erfindungsgemäßen T-Nuten zum Adaptieren und Anbringen von Maschinenelementen. Die Primärteilbleche 21 weisen T-Nuten auf, wodurch die Primärteilbleche 21 mittels einer Schiene 24 an einer Plattform 25 befestigt sind. Bei der Plattform 25 handelt es sich um eine Transportplattform, auf der die zu transportierenden Maschinenelemente (Last) angebracht werden kann. Auch die Permanentmagnete 22 können T-Nuten aufweisen.

Die Verwendung von T-Nuten zur Befestigung der Plattform 25 führt zu einer verbesserten mechanischen Stabilität und einer verbesserten Handhabbarkeit während des Fertigungsprozesses, da sich die Pole der Permanentmagnete 22 stark abstoßen.

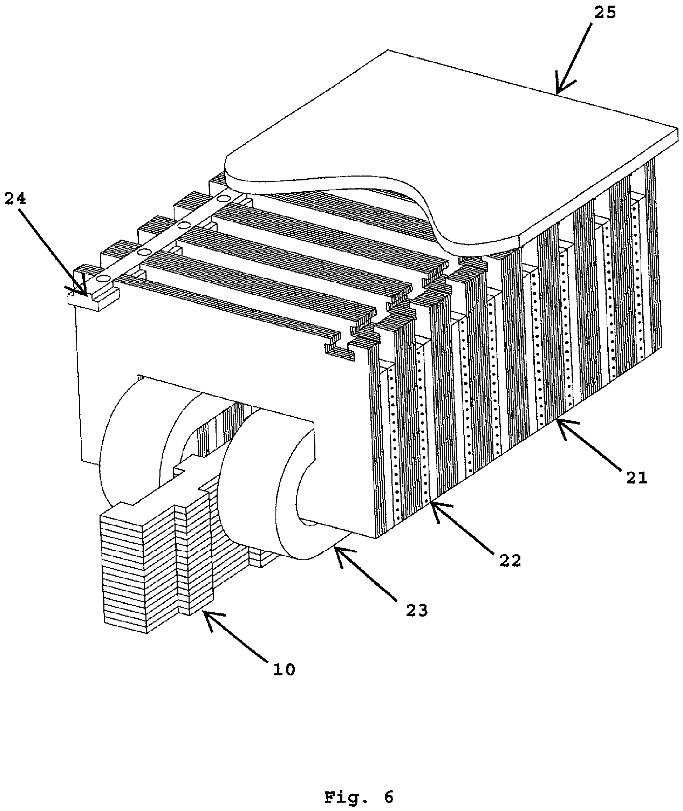

Figur 6 zeigt den Aufbau einer Transversalflussmaschine gemäß einer weiteren Ausführungsform der vorliegenden Erfindung. In dieser Ausführungsform sind die Primärteilbleche 21 und die Permanentmagnete 22 C-förmig ausgebildet, im Gegensatz zur Figur 2, in der die Primärteilbleche 21 und die Permanentmagnete 22 U-förmig ausgebildet sind. Durch die U-förmige Ausgestaltung ist eine schmale Ausführung des Sekundärteils möglich.

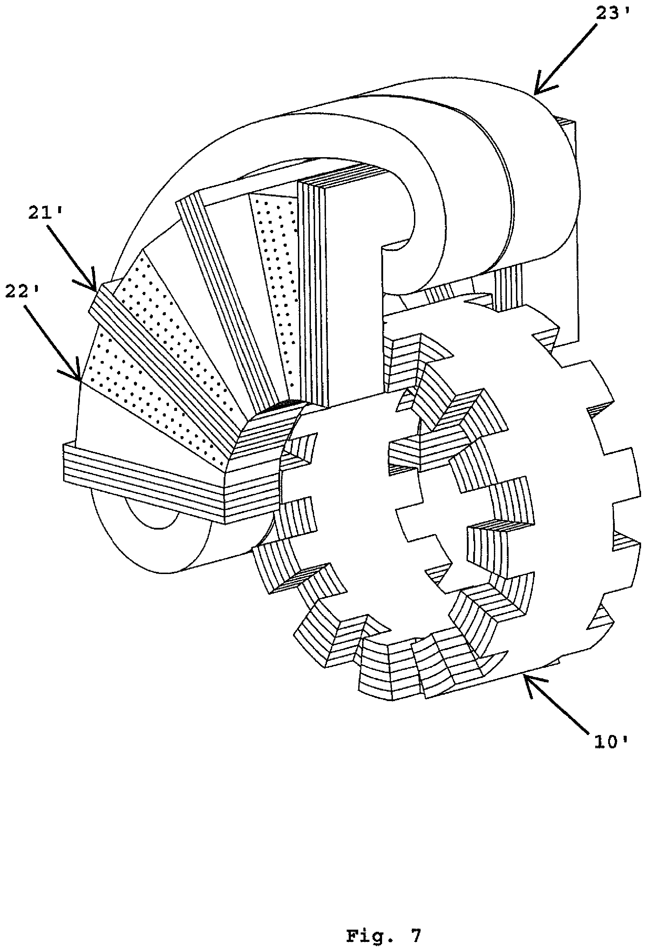

Figur 7 zeigt den Aufbau einer nicht-erfindungsgemäßen, rotierenden Transversalflussmaschine. Der Aufbau des rotativen Systems ähnelt dem des vorher beschriebenen Linearmotors. Das Primärteil der Transversalflussmaschine umfasst Primärteilbleche 21', Permanentmagneten 22' und eine Spule 23'. Die Rundung wird beim Primärteil durch keilförmige Permanentmagneten 22' erzielt.

Das Sekundärteil 10' umfasst mehrere aufeinanderliegende Schichten aus Sekundärteilblech. Das Sekundärteil 10' besteht aus gebogenen Blechen, die im grundsätzlichen Aufbau mit der Lineareinheit vergleichbar sind (Vorsprünge auf der einen wie auf der anderen Seite). Die runde Form der Sekundäreinheit kann durch das Aufwickeln der Bleche (bzw. eines Blechs) auf einen Dorn erreicht werden. Hierbei werden die jeweiligen Vorsprünge herausgeschnitten.

Die Schichtebenen des Sekundärteils 10' erstrecken sich parallel zur Bewegungsrichtung des Primärteils, d.h. konzentrisch um den Mittelpunkt der Drehrichtung der Transversalflussmaschine. Auch in dieser Ausführungsform stehen die Sekundärteilbleche (punktuell) senkrecht auf den Primärteilblechen. Bei dem Sekundärteil 10' kann es sich um ein einzelnes Blech handeln, welches aufgerollt ist, oder um mehrere gebogene Bleche, die übereinandergelegt werden. Auch im Fall einer rotierenden Transversalflussmaschine können die Vorsprünge im Sekundärteil 10' als periodisch betrachtet werden, da die Vorsprünge in periodischen Winkelbereichen liegen. Es ist auch möglich, das Primärteil vollständig oder auch nur partiell (Segmente) entlang des Motorumfangs auszubilden.

Bei der rotierenden Transversalflussmaschine sind die Vorsprünge zwar auch bevorzugt auf beiden Seiten alternierend angeordnet, jedoch besitzen sie nicht mehr alle den gleichen Abstand voneinander, da die Abstände der Vorsprünge hin zum Mittelpunkt der Maschine aufgrund des geringer werdenden Umfangs kürzer werden. Bei der Herstellung kann dies jedoch leicht in Betracht gezogen werden und die Vorsprünge können, z.B. durch Laserschneiden, entsprechend der Anforderungen ausgeschnitten werden.

Die Polgeometrie (Zahngeometrie), d.h. die Geometrien der Vorsprünge der Bleche, ist ebenso wie beim Linearantrieb vorteilhafterweise entsprechend den gewünschten Eigenschaften des Motors (Cogging, Moment, Verlustleistung, ..) frei gestaltbar. Es lassen sich sehr flache Bauweisen des Motors bei gleichzeitig hohem Moment realisieren. Darüber hinaus lässt sich die Rotorherstellung gegenüber konventionellen Transversalflussmotoren vereinfachen (Wickeln des Rotors). Bei großen Rotordurchmessern und segmentierten Primärteilen ist der Einsatz von Seltenen-Erden-Magneten deutlich geringer als bei konventionellen permanenterregten Synchronmotoren, wodurch sich die Kosten des Motors reduzieren lassen.

## Patentansprüche

1. Lineare Transversalflussmaschine, die ein Primärteil und ein Gesamtlängensekundärteil umfasst, wobei
der Fahrweg der linearen Transversalflussmaschine durch Aneinanderreihen einer Vielzahl von Sekundärteilen zu dem Gesamtlängensekundärteil erhalten wird,
ein Sekundärteil aus mehreren aufeinanderliegenden Schichten aus identischen Sekundärteilblechen (12) gebildet ist,
die Schichtebenen sich parallel zur Bewegungsrichtung des Primärteils erstrecken und jede Schicht Vorsprünge in der Schichtebene aufweist,
die Vorsprünge der einzelnen Sekundärteilblechschichten sich überlappen, sodass sie Pole (11) des Sekundärteils bilden,
die Sekundärteilbleche Pole bilden, deren Polformen konkav (111), konvex (112) oder spitz (113) sind,
das Sekundärteil weder Permanentmagnete noch Spulen umfasst,
alle Sekundärteilbleche eines einzelnen Sekundärteils (10) die gleiche Anzahl von Vorsprüngen auf der einen wie auf der anderen Seite aufweisen,
der Abstand der Vorsprünge gleich ist und die Enden des Sekundärteils (10) derart gebildet sind, dass nach Anlegen weiterer Sekundärteile (10) wieder der gleiche Abstand zwischen den Vorsprüngen vorliegt,
das Primärteil eine Vielzahl von aufeinandergestapelten Primärteilblechen (21), Permanentmagnete (22) und eine oder mehrere Spulen (23) umfasst,
ein Teil der Primärteilbleche (21) T-Nuten zum Adaptieren und Anbringen von Maschinenelementen aufweisen, und
die Sekundärteilbleche der mehreren Schichten aus miteinander verbundenen, verbackten Elektroblechen gebildet sind.

2. Lineare Transversalflussmaschine nach Anspruch 1, wobei die Vorsprünge der einzelnen Sekundärteilblechschichten alternierend auf zwei Seiten jeder Schicht ausgebildet sind, so dass auf einen Vorsprung auf der einen Seite ein anderer Vorsprung auf der anderen Seite folgt und/oder die Vorsprünge der jeweiligen Seite periodisch aufeinanderfolgen.

3. Lineare Transversalflussmaschine nach einem der vorhergehenden Ansprüche, wobei die Sekundärteilbleche (12) aufeinandergestapelt sind.

4. Lineare Transversalflussmaschine nach Anspruch 1, wobei das Primärteil weiterhin eine Plattform (25) umfasst, an der die Primärteilbleche mittels der T-Nuten angebracht sind.

5. Lineare Transversalflussmaschine nach einem der vorhergehenden Ansprüche, wobei die Primärteilbleche (21) gerade oder an einem Ende abgeschrägt oder abgerundet sind.

## Claims

1. Linear transverse flux machine comprising a primary part and an total length secondary part, wherein
the travel path of the linear transverse flux machine is obtained by aligning a plurality of secondary parts to form the total length secondary part,
a secondary part is formed of a plurality of stacked planes of identical secondary part sheets (12),
the layer planes extend parallel to the movement direction of the primary part, and each layer has protrusions in the layer plane,
the protrusions of the individual secondary part sheet layers overlap so that they form poles (11) of the secondary part,
the secondary part sheets form poles whose pole shapes are concave (111), convex (112) or pointed (113),
the secondary part comprises neither permanent magnets nor coils,
all secondary part sheets of a single secondary part (10) have the same number of protrusions on one side as on the other side,
the spacing of the protrusions is the same and the ends of the secondary part (10) are formed in such a way that after application of further secondary parts (10) the same spacing between the protrusions is again present,
the primary part comprises a plurality of primary part sheets (21) stacked on top of each other, permanent magnets (22), and one or more coils (23),
a part of the primary part sheets (21) have T-slots for adapting and mounting machine elements, and
the secondary part sheets of the plurality of layers are formed of interconnected baked electrical sheets.

2. Linear transverse flux machine of claim 1, wherein the protrusions of the individual secondary part sheet layers are formed in an alternating manner on two sides of each layer, such that a protrusion on one side is followed by another protrusion on the other side and/or the protrusions of the respective side periodically follow one another.

3. Linear transverse flux machine according to any one of the preceding claims, wherein the secondary part sheets (12) are stacked on top of each other.

4. Linear transversal flow machine according to claim 1, wherein the primary part further comprises a platform (25) to which the primary part sheets are attached using the T-slots.

5. Linear transverse flux machine according to any one of the preceding claims, wherein the primary part sheets (21) are straight or, at one end, beveled or rounded.

## Revendications

1. Machine à écoulement transversal linéaire comprenant une partie primaire et une partie secondaire de longueur totale, dans laquelle
la trajectoire de la machine à écoulement transversal linéaire est obtenue en juxtaposant une pluralité de parties secondaires à la partie secondaire de longueur totale,
une partie secondaire est formée de plusieurs couches superposées constituées de tôles de partie secondaire (12) identiques,
les plans de couche s'étendent parallèlement à la direction de déplacement de la partie primaire et chaque couche présente des saillies dans le plan de couche,
les saillies des différentes couches de tôle de partie secondaire se chevauchent de sorte à former des pôles (11) de la partie secondaire,
les tôles de partie secondaire forment des pôles dont les formes de pôle sont concaves (111), convexes (112) ou pointues (113),
la partie secondaire ne comprend ni aimants permanents ni bobines,
toutes les tôles de partie secondaire d'une partie secondaire (10) unique présentent le même nombre de saillies d'un côté que de l'autre,
la distance entre les saillies est identique et les extrémités de la partie secondaire (10) sont formées de sorte qu'après l'application d'autres parties secondaires (10), la distance entre les saillies est à nouveau identique,
la partie primaire comprend une pluralité de tôles de partie primaire (21) empilées les unes sur les autres, des aimants permanents (22) et une ou plusieurs bobines (23),
une partie des tôles de partie primaire (21) présentent des rainures en T pour l'adaptation et le montage d'éléments de machine, et
les tôles partielles secondaires de la pluralité de couches sont formées de tôles magnétiques liées entre elles et cuites.

2. Machine à écoulement transversal linéaire selon la revendication 1, dans laquelle les saillies des différentes couches de tôles de partie secondaire sont réalisées en alternance sur deux côtés de chaque couche, de sorte qu'une saillie sur un côté est suivie d'une autre saillie sur l'autre côté et/ou que les saillies de chaque côté se succèdent périodiquement.

3. Machine à écoulement transversal linéaire selon l'une quelconque des revendications précédentes, dans laquelle les tôles de partie secondaire (12) sont empilées les unes sur les autres.

4. Machine à écoulement transversal linéaire selon la revendication 1, dans laquelle la partie primaire comprend en outre une plate-forme (25) sur laquelle les tôles de partie primaire sont montées au moyen des rainures en T.

5. Machine à écoulement transversal linéaire selon l'une quelconque des revendications précédentes, dans laquelle les tôles de partie primaire (21) sont droites ou biseautées ou arrondies à une extrémité.
